# EUROPÄISCHE PATENTSCHRIFT

(11) **EP 1 625 814 B1**
(45) Veröffentlichungstag und Bekanntmachung des Hinweises auf die Patenterteilung: **10.10.2007**
(21) Anmeldenummer: 04019357.5
(22) Anmeldetag: 14.08.2004
(51) Int. Cl.: A47J 31/24, A47J 31/46

(54) **Vorrichtung zum Brühen von Kaffee**
Device for brewing coffee
Dispositif pour la préparation de café

(43) Veröffentlichungstag der Anmeldung: 15.02.2006
(73) Patentinhaber: Melitta France SAS, 75010 Paris (FR)
(72) Erfinder: Ruckstuhl, Stephan, 4623 Neuendorf (CH)
(74) Vertreter: Dantz, Jan Henning

(56) Entgegenhaltungen:
- EP-A- 0 097 129
- FR-A- 2 766 346
- US-A- 5 302 407
- US-B1- 6 192 786

## Beschreibung

Die vorliegende Erfindung betrifft eine Vorrichtung zum Brühen von Kaffee, insbesondere für einen Kaffeeautomaten, mit einer von einem Gehäuse umgebenen Brühkammer, an deren einer Seite ein Boden mit einem Abfluss und an deren gegenüberliegenden Seite eine Brause vorgesehen ist, wobei die Brause eine Düse zum Zuführen eines Fluides umfasst.

Es gibt Kaffeeautomaten, bei denen Portionspackungen auf einem Halter eingelegt werden können, der dann in ein zu verschließendes Gehäuse für einen Brühvorgang eingefügt werden kann. Falls eine größere Menge an Kaffee gebrüht werden soll, kann ein anderer Halter eingesetzt werden, um zwei Portionspackungen einzulegen. Bei dieser Brühvorrichtung ist nachteilig, dass für unterschiedliche Mengen an Kaffee bzw. Portionspackungen verschiedene Halter eingesetzt werden müssen. Dies ist einerseits umständlich in der Handhabung und andererseits unflexibel, da je nach Geschmack eine feinere Dosierung der Kaffeemenge wünschenswert ist.

Aus der FR 2766346 ist eine Vorrichtung zum Brühen von Espresso-Kaffee bekannt, bei der ein perforierter Boden einer Brühkammer zur Aufnahme einer unterschiedlichen Füllmenge bewegbar ausgestaltet ist. Der Boden ist dabei verschiebbar in einer Aufnahme gehalten und randseitig abgedichtet.

In der US 6 192 786 ist eine Espressomaschine offenbart, die eine in einem Gehäuse angeordnete Brühkammer umfasst. Die Brühkammer ist bodenseitig durch eine Aufnahme begrenzt, die in verschiedenen Positionen fixiert werden kann, damit eine unterschiedliche Füllmenge aufnehmbar. Beim Verschieben wird eine Dichtung am Boden der Brühkammer entlang des Gehäuses geschoben.

Es ist daher Aufgabe der vorliegenden Erfindung eine Vorrichtung zum Brühen von Kaffee zu schaffen, die einfach in der Handhabung ist und flexibel unterschiedliche Mengen an Kaffee oder eines anderen Extraktionsgutes aufnehmen kann.

Diese Aufgabe wird mit einer Vorrichtung zum Brühen von Kaffee mit den Merkmalen des Anspruches 1 gelöst. Erfindungsgemäß ist der Boden innerhalb des Gehäuses für die Brühkammer bewegbar und abhängig vom Füllgrad der Brühkammer für den Brühvorgang in unterschiedlichen Positionen fixierbar. Dadurch kann in der Brühkammer je nach Erfordernis bzw. Geschmack die Menge an Kaffee eingestellt werden, wobei für die Veränderung des Volumens der Brühkammer keine unterschiedlichen Bauteile erforderlich sind.

Um in der Brühkammer auch einen Brühvorgang unter Druck ausführen zu können, ist zwischen Boden und Gehäuse eine umlaufende Dichtung angeordnet. Die Dichtung kann dabei in eine Brühposition mit einem Anpressdruck zwischen Boden und Gehäuse gehalten sein und für die Bewegung des Bodens innerhalb des Gehäuses kann der Anpressdruck reduziert oder vollständig weggenommen sein. Denn für den Brühvorgang mit einem gewissen Druck von beispielsweise zwischen 2 und 5 bar ist es erforderlich, dass eine Abdichtung der Brühkammer vorhanden ist, wofür die Dichtung mit Anpressdruck zwischen Boden und Gehäuse gehalten ist. Für die Bewegung des Bodens ist es hingegen nachteilig, wenn der Anpressdruck noch vorhanden ist, da dies nur zu einem Verschleiß der Dichtung und zu hohen Reibkräften führen würde.

Gemäß einer bevorzugten Ausführungsform der Erfindung ist die Position des Bodens in dem Gehäuse über einen Mechanismus einstellbar, sodass die Handhabung einfach ausgestaltet ist. Denn über den Mechanismus kann von außen ohne manuelle Bewegung des Bodens die Position vorbestimmt werden.

Für die Bewegung des Bodens ist es daher von Vorteil, wenn die Dichtung leichtgängig in dem Gehäuse geführt ist. Die Dichtung kann daher relativ zu dem Boden bewegbar sein und über Keilflächen kann ein Anpressdruck zwischen Dichtung und Gehäuse erzeugt werden. Dadurch wird gewährleistet, dass lediglich in der fixierten Position des Bodens bzw. in der Brühposition ein Anpressdruck vorherrscht.

Für eine mechanische Umsetzung der Anordnung der Dichtung an dem Boden ist der Boden vorzugsweise an einem Halter verschiebbar gelagert und weist auf der zur Brühkammer abgewandten Seite einen keilförmigen Vorsprung auf, dessen äu-βere Keilfläche an einer Dichtlippe der Dichtung zur Erzeugung des Anpressdruckes anlegbar ist. Dadurch kann mit wenigen Bauteilen eine einfache Möglichkeit der Abdichtung der Brühkammer geschaffen werden. Die Dichtung kann dabei auf der vom Boden abgewandten Seite in eine Aussparung an dem Halter aufgenommen sein, der als eine Art Anschlag wirkt um die Dichtung auch klemmend zwischen dem Halter und dem Boden festlegen zu können.

Für eine einfache Handhabung weist die Vorrichtung einen Schalter auf, mittels dem das Volumen der Brühkammer im Hinblick auf die Dicke und die Anzahl der einzusetzenden Portionspackungen einstellbar ist. Für eine möglichst flexible Abstimmung kann ferner eine Dosiervorrichtung vorgesehen sein, mittels der die Wassermenge für den Brühvorgang einstellbar ist. Dadurch kann der Verbraucher je nach Stärke und Menge des gewünschten Kaffees eine individuelle Einstellung vornehmen.

Die Erfindung wird nachfolgend anhand eines Ausführungsbeispieles mit Bezug auf die beigefügten Zeichnungen näher erläutert. Es zeigen:
- Figur 1: eine geschnittene Seitenansicht eines Kaffeeautomaten mit einer erfindungsgemäßen Vorrichtung zum Brühen von Kaffe;
- Figur 2: eine vergrößerte geschnittene Seitenansicht der Vorrichtung der Figur 1;
- Figur 3: eine Draufsicht auf die Brause der Brühkammer der Figur 2;
- Figur 4: eine Draufsicht auf den Boden der Brühkammer der Figur 2, und
- Figur 5: eine perspektivische Ansicht auf die Einstellmechanik für die Brühkammer.

Ein Kaffeeautomat 1 weist einen Vorratsbehälter 2 für Frischwasser auf, der über ein Auslassventil 3 und eine Leitung 4 mit einer Pumpe 5 verbunden ist. Mittels der Pumpe 5 lässt sich das Wasser zu einer Heizplatte 6 führen, in der spiralförmige Durchgänge 7 ausgebildet sind, in denen das Wasser erhitzt werden kann. Benachbart ist eine Platte 8 vorgesehen, die Teil einer Brause bildet und in der eine Zuleitung 30 für das erhitzte Wasser vorgesehen ist. An der Platte 8 ist eine Halterung 9 für ein Dichtelement 20 montiert, das im Wesentlichen ringförmig ausgebildet ist und in dem mittig eine Düse 11 vorgesehen ist.

Über die Düse 11 kann das erhitzte Wasser in eine Brühkammer 19 einströmen, die von einem Gehäuse 10 umgeben ist. Auf der gegenüberliegenden Seite der Düse 11 ist ein Boden 12 zur Begrenzung der Brühkammer 19 vorgesehen, in dem ein Abfluss ausgebildet ist, sodass das gebrühte Fluid durch einen trichterförmigen Auslass 13 zu einem Ausleger 14 strömt, an dem eine Auslassöffnung 15 zur Befüllung von Kaffeetassen vorgesehen ist.

Der Kaffeeautomat 1 umfasst eine Brühkammer 19, in der ein oder mehrere Portionspackungen mit Kaffee einfügbar sind. Hierfür ist eine zylindrische Abdeckung 16 vorgesehen, an der ein Griff 17 ausgebildet ist, über den das Gehäuse 10 über eine Betätigungsmechanik von der Brause gelöst und verschwenkt werden kann, sodass die Brühkammer 19 von oben befüllt wird. Anschließend wird die Abdeckung 16 verschlossen und das Gehäuse 10 in die gezeigte Position bewegt. Nach dem Brühvorgang werden dann die Portionspackungen in einen Sammelbehälter 18 entleert, um die Brühkammer 19 erneut zu befüllen. Für den gezeigten Kaffeeautomaten 1 können jedoch auch andere Betätigungsmechaniken verwendet werden, um die Brühvorrichtung mit ein oder mehreren Portionspackungen zu befüllen.

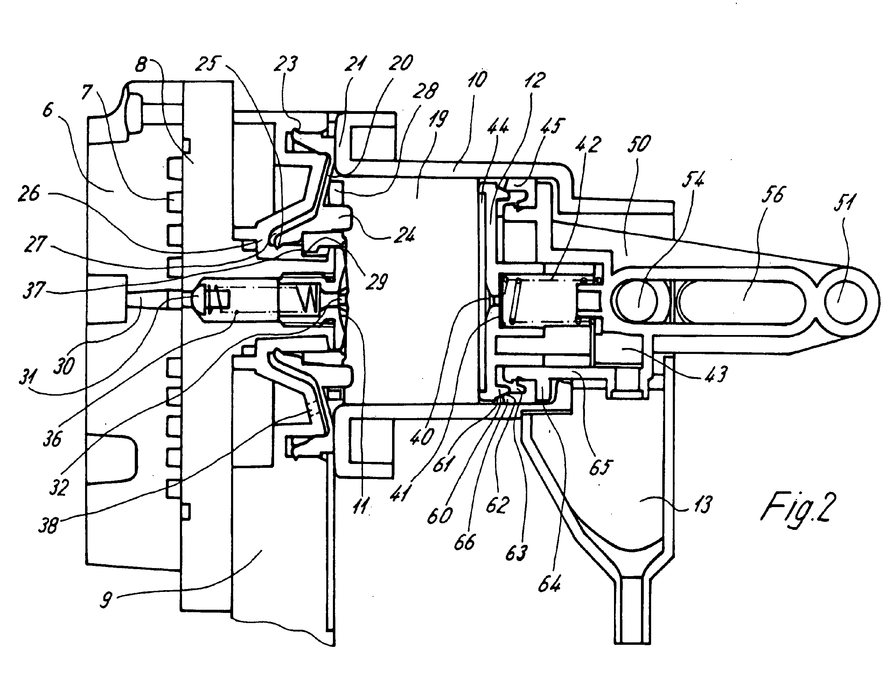

In Figur 2 ist die Brühvorrichtung des Kaffeeautomaten 1 im Detail dargestellt.

Das Dichtelement 20 ist ringförmig ausgebildet und besitzt einen äußeren Abschnitt, an dem Dichtlippen 22 ausgebildet sind, die an einem radial nach außen hervorstehenden Flansch 21 des Gehäuses 10 anliegen. An dem äußeren Abschnitt der Dichtung 20 ist ferner eine Dichtfläche 23 ausgebildet, die für eine Abdichtung zwischen dem Halter 9 und der Dichtung 20 sorgt. An einem inneren Abschnitt der Dichtung 20 ist eine weitere Dichtlippe 25 zur Ausbildung einer Dichtfläche vorgesehen, die an einem ringförmigen Abschnitt 26 des Halters 9 anliegt. Der Halter 9 ist dabei mit einer ringförmigen Wand versehen, die ähnlich der Geometrie der Dichtung 20 ausgebildet ist. Zwischen der Wand des Halters 9 und der Dichtung 20 ist somit ein Druckraum 27 ausgebildet, der außen von der Dichtfläche 23 und innen von der Dichtfläche 25 begrenzt ist und über eine Zuleitung 38 mit Druck beaufschlagbar ist. Die Zuleitung 38 steht in Verbindung mit der Zuleitung 30 zum Zuführen des erhitzten Wassers in die Brühkammer 19 und weist zur Druckminderung vorzugsweise ebenfalls ein Ventil mit einer Feder auf, wie dies bei der Zuleitung 38 der Fall ist.

Auf der zur Brühkammer 19 gewandten Seite des Dichtelementes 20 ist ein plattenförmiges Druckelement 28 angeordnet, das durch zwei an dem Dichtelement 20 ausgebildete Zapfen 24 ausgerichtet ist. Das Druckelement 28 weist eine innere Aussparung auf, in der die feststehende Düse 11 aufgenommen ist. Das Druckelement 28 weist dabei einen Vorsprung 29 auf, der maximal zwischen der Düse 11 und einem Anschlag 37 an dem Halter 9 bewegbar ist. Das Druckelement 28 ist in diesem Bereich verschiebbar angeordnet und kann entsprechend in die Brühkammer 19 hinein bewegt werden.

Nach der Erhitzung des Fluides kann dieses durch eine Zuleitung 30 strömen, die durch ein vorgespanntes Ventil 31 verschlossen ist. Hierfür ist eine Feder 36 zwischen dem Ventilkörper 31 und der Düse 11 angeordnet. Die Düse 11 ist an einem hülsenförmigen Vorsprung der Platte 8 verschraubt und weist eine in die Brühkammer 19 mündende Öffnung 32 auf.

Auf der gegenüberliegenden Seite der Düse 11 ist ein Boden 12 an der Brühkammer 19 vorgesehen, der mehrere Rippen 44 und einen mittigen Abfluss 40 aufweist. Der Abfluss 40 ist über einen Ventilkörper 41 verschlossen, der über eine Feder 42 in die geschlossene Position vorgespannt ist. Dadurch ist gewährleistet, dass innerhalb der Brühkammer 19 erst bei Überschreiten eines gewissen Druckes das Fluid über einen Ausströmkanal 43 abgeführt werden kann.

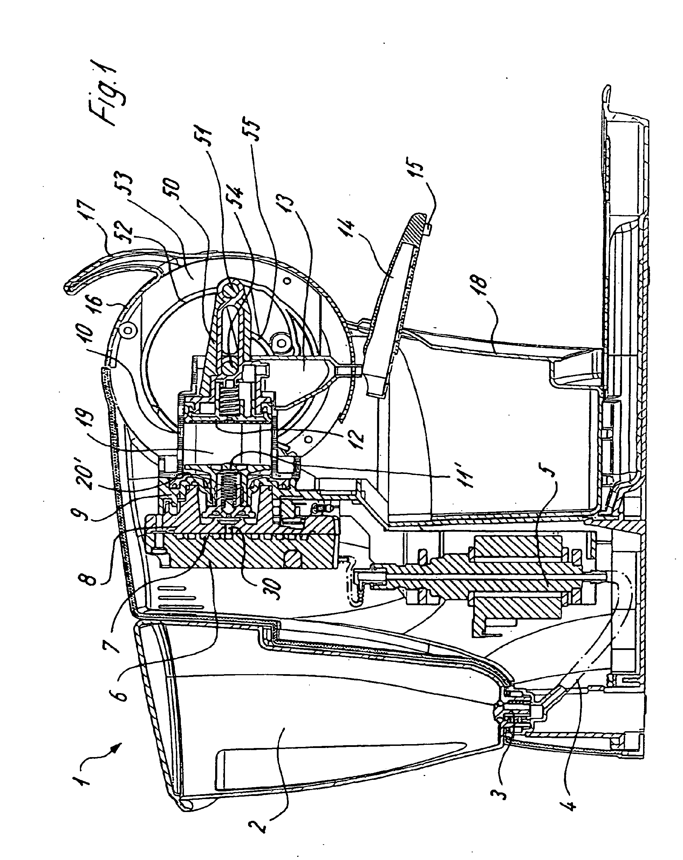

Der Boden 12 ist an einem Halter 50 gelagert, der mit einem Zapfen 51 gekoppelt ist. Der Zapfen 51 ist in einer Kurve 52 einer Kurvenführung 53 gehalten, sodass bei einer Bewegung an dem Betätigungselement 17 die Kurvenführung 53 bewegt wird und über den Zapfen 51 der Halter 50 zusammen mit dem Boden 12 innerhalb des Gehäuses 10 verschoben wird. Ferner ist an dem Halter 50 ein Langloch 56 vorgesehen, durch welches ein weiterer Zapfen 54 als Drehpunkt für das Gehäuse 10 und Zentrumslagerung der Kurvenführung 53 führt, an der eine weitere Kurve 55 ausgebildet ist. Durch Verschwenken des Betätigungselementes 17 lässt sich somit einerseits der Boden 12 in dem Gehäuse 10 als auch das Gehäuse 10 selbst für ein Befüllen verschwenken, wobei die Brühkammer 19 dann eine nach oben gerichtete Öffnung besitzt, in die ein oder mehrere Portionspackungen eingefügt werden können. Anschließend wird das Betätigungselement 17 wieder zurückgeschwenkt und die Brühkammer 19 nimmt die in Figur 1 oder 2 gezeigte Position ein und der Boden 12 wird automatisch auf die, den eingelegten Portionspackungen, entsprechende Brühraumhöhe eingestellt.

An dem Boden 12 ist benachbart eine Dichtung 45 angeordnet, die eine Dichtlippe 66 aufweist, die nur leicht an dem Gehäuse 10 anliegt, sodass der Boden 12 leichtgängig verschiebbar ist. Für die Brühvorgang muss die Dichtung 45 jedoch mit einem Anpressdruck in dem Gehäuse 10 aufgenommen sein, um einen Druck in der Brühkammer 19, beispielsweise zwischen 2 und 5 bar aufbauen zu können. Hierfür weist der Boden 12 an der von der Brühkammer 19 abgewandten Seite einen umlaufenden Vorsprung 60 auf, der im Querschnitt keilförmig ausgebildet ist und eine äußere Keilfläche 61 aufweist, die an die Dichtlippe 66 anlegbar ist. Die Dichtlippe 66 weist im vorderen Bereich ebenfalls eine Schräge 62 auf, die an die Keilfläche 61 anlegbar ist. Die Dichtung 45 ist im Querschnitt U-förmig ausgebildet und weist eine Aufnahme 63 für den Vorsprung 60 auf und liegt an der gegenüberliegenden Seite an einem Ring 64 an einem hülsenförmigen Abschnitt 65 des Halters 50 an.

Solange der durch eine Feder unterstützte Abstand zwischen Boden 12 und Dichtung 45 vorhanden ist, lässt sich der Boden 12 leichtgängig in dem Gehäuse 10 verschieben. Für den Brühvorgang wird der Boden 12 formschlüssig an die Portionspackungen angelegt, kann aber auch mit leichtem Anpressdruck an diese gedrückt werden, sodass sich der Boden 12 zu der Dichtung 45 bewegt. Durch diese Bewegung drückt die Keilfläche 61 die Dichtlippe 66 nach außen und sorgt für eine zuverlässige Abdichtung. Die Anpresskraft wird noch erhöht, wenn das Druckelement 28 bei Einleitung des Brühvorganges durch den Aufbau von Druck in der Druckkammer 27 gegen die Portionspackungen gedrückt wird, die dann wiederum den Boden 12 gegen die Dichtung 45 drücken. Dadurch werden einerseits eine gute Abdichtung der Brühkammer 19 und andererseits eine große Toleranz bei der Kaffeemenge erreicht.

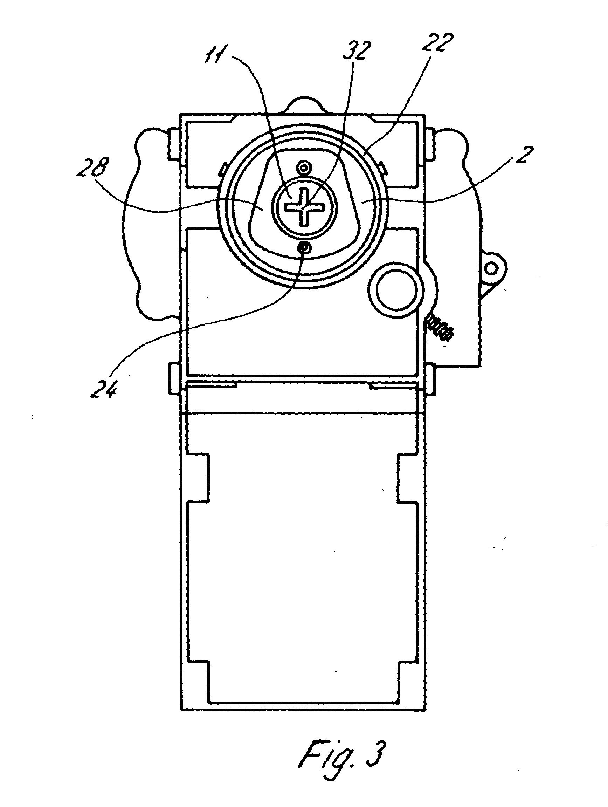

In Figur 3 ist die Düse 11 in Draufsicht gezeigt, aus der die kreuzförmige Auslassöffnung 32 ersichtlich ist. Die Düse 11 ist innerhalb des Druckelementes 28 aufgenommen, das über Zapfen 24 zentriert gehalten ist uns rückseitig an der Dichtung 20 anliegt. Die Dichtlippen 22 sind kreisförmig ausgebildet und liegen an dem Gehäuse 10 an.

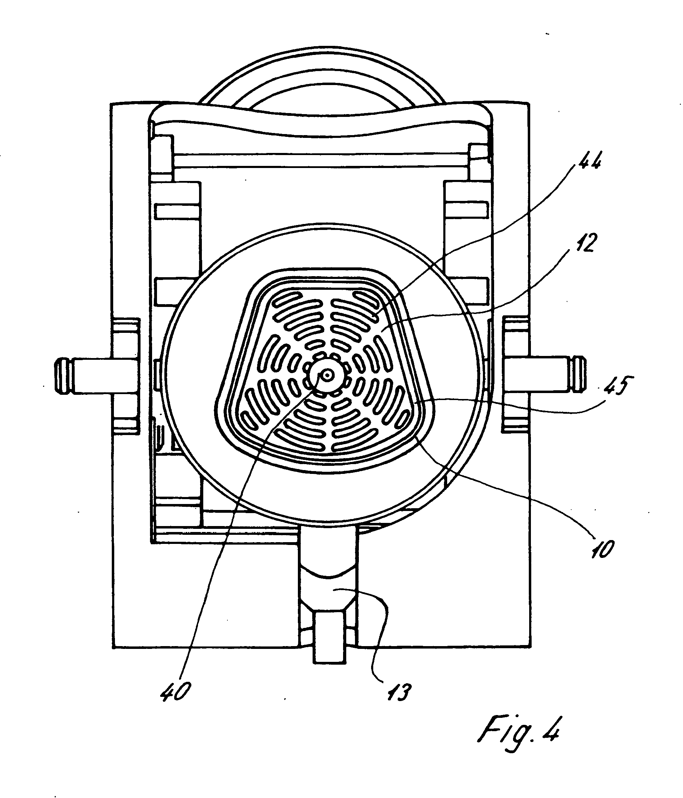

In Figur 4 ist der Boden 12 der Brühkammer 19 dargestellt. Die Rippen 44 sorgen für einen Abstand zwischen den Portionspackungen innerhalb der Brühkammer 19 und einer Bodenfläche, sodass das Fluid zu dem Abfluss 40 geführt werden kann. Randseitig ist der Boden 44 über eine Dichtung 45 abgedichtet.

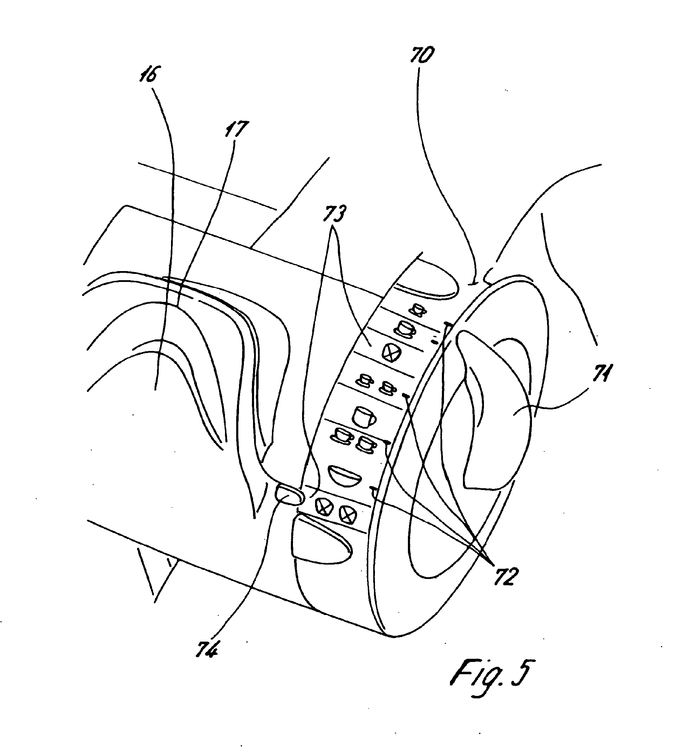

In Figur 5 ist der Verstellmechanismus an dem Kaffeeautomaten 1 gezeigt. Ein Gehäusering 70 ist mit Markierungen 72 versehen, die symbolisch die benötigte Wassermenge anzeigen. Über einen Hebel 71 kann die gewünschte Wassermenge anhand der Markierungen 72 eingestellt werden, sodass die Pumpe 5 entsprechend nur das gewünschte Wasservolumen bereitstellt.

Ferner befindet sich auf der zylindrischen Abdeckung 16 eine Markierung 74, welche beim Schließen der Brühgruppe mit dem Betätigungselement 17 über Markierungen 73 auf dem Gehäusering 70 anzeigt, wie viele Portionspackungen eingelegt wurden. Die Markierungen 73 stehen für eine Portionspackung bzw. zwei Portionspackungen. Dadurch kann der Benutzer frei wählen, welche Menge an Kaffee in der Brühkammer 19 gebrüht werden soll. Es ist natürlich auch möglich, noch eine feinere Einstellung der Größe der Brühkammer 19 vorzusehen, beispielsweise wenn es unterschiedlich dicke Portionspackungen gibt, die je nach Kaffeegeschmack eine unterschiedliche Menge an Kaffeepulver enthalten. Zudem können auch mehr als zwei Portionspackungen in die Brühkammer 19 eingelegt werden.

Die Verstellmechanik für die Dosierung der Kaffeemenge und des Wassers kann natürlich auch anders ausgebildet sein und beispielsweise eine stufenlose Verstellung mit einer Mengenanzeige besitzen.

## Patentansprüche

1. Vorrichtung zum Brühen von Kaffee, insbesondere für einen Kaffeeautomaten (1), mit einer von einem Gehäuse (10) umgebenen Brühkammer (19), an deren einer Seite ein Boden (12) mit einem Abfluss (40) und an deren gegenüberliegenden Seite eine Brause (8, 9, 11) vorgesehen ist, wobei die Brause (8, 9, 11) eine Düse (11) zum Zuführen eines Fluides umfasst, wobei der Boden (12) innerhalb des Gehäuses (10) bewegbar ist und abhängig vom Füllgrad der Brühkammer (19) für den Brühvorgang in unterschiedlichen Positionen fixierbar ist und zwischen Boden (12) und Gehäuse (10) eine umlaufende Dichtung (45) angeordnet ist, **dadurch gekennzeichnet, dass** die Dichtung (45) in einer Brühposition mit einem Anpressdruck zwischen Boden (12) und Gehäuse (10) gehalten ist und für die Bewegung des Bodens (12) innerhalb des Gehäuses (10) der Anpressdruck zumindest reduziert ist.

2. Vorrichtung nach Anspruch 1, **dadurch gekennzeichnet, dass** die Position des Bodens (12) in dem Gehäuse (10) über einen Mechanismus automatisch einstellbar ist.

3. Vorrichtung nach Anspruch 1 oder 2, **dadurch gekennzeichnet, dass** die Dichtung (45) relativ zu dem Boden (12) bewegbar ist und über Keilflächen (61, 62) ein Anpressdruck zwischen Dichtung (45) und Gehäuse (10) erzeugbar ist.

4. Vorrichtung nach einem der Ansprüche 1 bis 3, **dadurch gekennzeichnet, dass** der Boden (12) an einem Halter (50) verschiebbar gelagert ist und auf der zur Brühkammer (19) abgewandten Seite einen keilförmigen Vorsprung (60) aufweist, dessen äußere Keilfläche (61) an einer Dichtlippe (66) der Dichtung (45) zur Erzeugung des Anpressdruckes anlegbar ist.

5. Vorrichtung nach einem der Ansprüche 1 bis 4, **dadurch gekennzeichnet, dass** die Dichtung (45) auf der vom Boden (12) abgewandten Seite in einer Aussparung an einem Halter (50) aufgenommen ist.

6. Vorrichtung nach einem der Ansprüche 1 bis 5, **dadurch gekennzeichnet, dass** die Brause (8, 9, 11) ein Druckelement aufweist, das bei Einleitung des Brühvorganges in Richtung der Brühkammer (19) hydraulisch bewegbar ist und **dadurch** die Portionspackungen zu dem Boden (12) hin gedrückt werden.

7. Vorrichtung nach einem der Ansprüche 1 bis 6, **dadurch gekennzeichnet, dass** eine Markierung (74) vorgesehen ist, mittels der das Volumen der Brühkammer (19) im Hinblick auf die Dicke und die Anzahl der eingesetzten Portionspackungen angezeigt wird.

8. Vorrichtung nach einem der Ansprüche 1 bis 7, **dadurch gekennzeichnet, dass** eine Dosiervorrichtung (71) vorgesehen ist, mittels der die Wassermenge für den Brühvorgang einstellbar ist.

9. Vorrichtung nach einem der Ansprüche 1 bis 8, **dadurch gekennzeichnet, dass** eine Feder (42) zwischen dem Boden 12 und dem Halter 50 vorgesehen ist, und eine Dichtung (45) durch eine Bewegung des Bodens (12) relativ zu dem Halter (50) zu spannen.

10. Vorrichtung nach einem der Ansprüche 1 bis 9, **dadurch gekennzeichnet, dass** der Boden (12) innerhalb des Gehäuses (10) über Kurven, Hebel, Kulissen oder andere Mechaniken ohne Voreinstellung automatisch für den Brühvorgang in unterschiedlichen Positionen fixierbar ist.

## Claims

1. Apparatus for brewing coffee, in particular for a coffee machine (1), having a brewing chamber (19) which is enclosed by a housing (10) and has a base (12) with an outflow (40) provided on one side and a nozzle assembly (8, 9, 11) provided on its opposite side, the nozzle assembly (8, 9, 11) comprising a nozzle (11) for feeding a fluid, it being possible for the base (12) to be moved within the housing (10) and to be fixed in different positions for the brewing operation in dependence on the degree to which the brewing chamber (19) is filled, and an all-round seal (45) being arranged between the base (12) and housing (10), **characterized in that**, in a brewing position, the seal (45) is retained with a contact pressure between the base (12) and housing (10), and the contact pressure is at least reduced for the movement of the base (12) within the housing (10).

2. Apparatus according to Claim 1, **characterized in that** it is possible to set the position of the base (12) in the housing (10) automatically via a mechanism.

3. Apparatus according to Claim 1 or 2, **characterized in that** the seal (45) can be moved relative to the base (12), and wedge surfaces (61, 62) can be used to produce a contact pressure between the seal (45) and housing (10).

4. Apparatus according to one of Claims 1 to 3, **characterized in that** the base (12) is mounted in a displaceable manner on a holder (50) and, on the side which is directed away from the brewing chamber (19), has a wedge-shaped protrusion (60), of which the outer wedge surface (61) can be positioned against a sealing lip (66) of the seal (45) in order to produce the contact pressure.

5. Apparatus according to one of Claims 1 to 4, **characterized in that**, on the side which is directed away from the base (12), the seal (45) is accommodated in a clearance on a holder (50).

6. Apparatus according to one of Claims 1 to 5, **characterized in that** the nozzle assembly (8, 9, 11) has a pressure-exerting element which, when the brewing operation is initiated, can be moved hydraulically in the direction of the brewing chamber (19), in which case the portion packs are forced in the direction of the base (12).

7. Apparatus according to one of Claims 1 to 6, **characterized by** the provision of a marking (74) which indicates the volume of the brewing chamber (19) in respect of the thickness and number of portion packs used.

8. Apparatus according to one of Claims 1 to 7, **characterized by** the provision of a metering arrangement (71) by means of which it is possible to set the quantity of water for the brewing operation.

9. Apparatus according to one of Claims 1 to 8, **characterized in that** a spring (42) is provided between the base (12) and the holder (50) in order to subject a seal (45) to stressing by a movement of the base (12) relative to the holder (50).

10. Apparatus according to one of Claims 1 to 9, **characterized in that** it is possible to fix the base (12) automatically in different positions within the housing (10) for the brewing operation via curved elements, levers, guide means or other mechanisms, without any pre-setting measures being required.

## Revendications

1. Dispositif de préparation du café, en particulier pour un distributeur de café (1), comportant une chambre d'ébullition (19) entourée par un boîtier (10), sur un côté de laquelle est prévu un fond (12) avec une sortie (40) et sur l'autre côté de laquelle est prévue une pomme d'aspersion (8, 9, 11), la pomme d'aspersion (8, 9, 11) comportant une buse (11) pour l'admission d'un fluide, le fond (12) étant mobile à l'intérieur du boîtier (10) et pouvant être fixé en fonction du niveau de remplissage de la chambre d'ébullition (19) dans différentes positions pour le processus de préparation du café, et une garniture d'étanchéité (45) étant disposée entre le fond (12) et le boîtier (10), **caractérisé en ce que** la garniture d'étanchéité (45) est maintenue avec une pression d'appui dans une position de préparation du café entre le fond (12) et le boîtier (10) et la pression d'appui est au moins diminuée pour le déplacement du fond (12) à l'intérieur du boîtier (10).

2. Dispositif selon la revendication 1, **caractérisé en ce que** la position du fond (12) dans le boîtier (10) peut être réglée automatiquement par l'intermédiaire d'un mécanisme.

3. Dispositif selon la revendication 1 ou 2, **caractérisé en ce que** la garniture d'étanchéité (45) est mobile par rapport au fond (12) et une pression d'appui peut être générée entre la garniture d'étanchéité (45) et le boîtier (10), par l'intermédiaire de surfaces en forme de clavettes (61, 62).

4. Dispositif selon l'une quelconque des revendications 1 à 3, **caractérisé en ce que** le fond (12) est logé de manière mobile contre un support (50) et comporte, sur le côté opposé à la chambre d'ébullition (19), une saillie (60) en forme de clavette, dont la surface en clavette (61) extérieure peut être mise en appui contre une lèvre d'étanchéité (66) de la garniture d'étanchéité (45) pour générer la pression d'appui.

5. Dispositif selon l'une quelconque des revendications 1 à 4, **caractérisé en ce que** la garniture d'étanchéité (45), sur le côté opposé au fond (12), est logée dans un évidement sur un support (50).

6. Dispositif selon l'une quelconque des revendications 1 à 5, **caractérisé en ce que** la pomme d'aspersion (8, 9, 11) comporte un élément de pression qui, lors du démarrage du processus de préparation du café, peut être
déplacé par voie hydraulique vers la chambre d'ébullition (19) et, de ce fait, comprime contre le fond (12) les dosettes de café.

7. Dispositif selon l'une quelconque des revendications 1 à 6, **caractérisé en ce qu'**il est prévu un repère (74), lequel indique le volume de la chambre d'ébullition (19) par rapport à l'épaisseur et au nombre de dosettes de café utilisées.

8. Dispositif selon l'une quelconque des revendications 1 à 7, **caractérisé en ce qu'**il est prévu un dispositif de dosage (71) qui permet de régler la quantité d'eau pour le processus de préparation du café.

9. Dispositif selon l'une quelconque des revendications 1 à 8, **caractérisé en ce qu'**il est prévu un ressort (42) entre le fond (12) et le support (50) et pour bloquer une garniture d'étanchéité (45) par un mouvement du fond (12) par rapport au support (50).

10. Dispositif selon l'une quelconque des revendications 1 à 9, **caractérisé en ce que** le fond (12), par l'intermédiaire de cames, leviers, coulisses ou autres mécanismes, peut être fixé à l'intérieur du boîtier (10) automatiquement sans préréglage dans différentes positions pour le processus de préparation du café.
